# EUROPÄISCHE PATENTSCHRIFT

(11) **EP 4 303 670 B1**
(45) Veröffentlichungstag und Bekanntmachung des Hinweises auf die Patenterteilung: **12.02.2025**
(21) Anmeldenummer: 22183143.1
(22) Anmeldetag: 05.07.2022
(51) Int. Cl.: G05B 9/03

(54) **WERKZEUGNMASCHINE UND VERFAHREN ZUR STEUERUNG EINER WERKZEUGMASCHINE**
MACHINE TOOL AND METHOD OF CONTROLLING A MACHINE TOOL
MACHINE-OUTIL ET PROCÉDÉ DE COMMANDE D'UNE MACHINE-OUTIL

(43) Veröffentlichungstag der Anmeldung: 10.01.2024
(73) Patentinhaber: SMW-AUTOBLOK Spannsysteme GmbH, 88074 Meckenbeuren (DE)
(72) Erfinder: MAURER, Eckhard, 88094 Oberteuringen (DE)
(74) Vertreter: Christ, Niko

(56) Entgegenhaltungen:
- EP-A1- 3 620 248
- EP-A1- 4 015 144
- US-A1- 2006 176 823

## Beschreibung

Die vorliegende Erfindung betrifft eine Werkzeugmaschine mit einer feststehenden Maschinensteuerung und einer drehenden Spannvorrichtung, wobei die Maschinensteuerung unter Zwischenschaltung einer Kopplungseinheit mit einer mit der Spannvorrichtung drehenden Spannvorrichtungssteuerung kommuniziert, wobei die Kopplungseinheit die Maschinensteuerung berührungslos mit der Spannvorrichtungssteuerung datenverbindet, wobei die Spannvorrichtungssteuerung eine Steuereinheit zur Ansteuerung von Vortriebsmitteln zum Betätigen von Spannmitteln der Spannvorrichtung aufweist und der Steuereinheit wenigstens zwei redundante Mikroprozessoren zugeordnet sind, durch welche von der Maschinensteuerung über die Steuereinheit empfangene Prozessdatensätze unabhängig voneinander prüfbar und/oder von Prozesssensoren empfangene Prozessdaten unabhängig voneinander in Prozessdatensätze einsetzbar und über die Steuereinheit an die Maschinensteuerung übermittelbar sind, sowie ein Verfahren zur Steuerung einer solchen Werkzeugmaschine.

Eine derartige Werkzeugmaschine ist bereits aus der EP 4 015 144 A1 vorbekannt. Hinsichtlich des weiteren Standes der Technik ist zunächst auf die EP 3 620 248 A1 zu verweisen. Diese Schrift sieht eine Kopplungseinrichtung für eine Werkzeugmaschine vor, über welche ein induktiv betriebenes Spannfutter unabhängig von nutzerspezifisch vorhandenen Baugruppen der Werkzeugmaschine eine elektrische Ankopplung in möglichst einfacher Weise gelingt und eine Überwachung der Funktion des Spannfutters und der an dieser angebrachten Spannbacken gewährleistet ist.

Dies gelingt durch die Anordnung einer programmierbaren Schnittstelle derart, dass dem Spannfutter ein Interface zugeordnet ist, welches von einer Steuereinheit einer Maschinensteuerung unter Zwischenschaltung eines Kopplers angesteuert werden kann.

Es ergibt sich jedoch hieraus die Problematik, dass nicht sichergestellt werden kann, dass Stellsignale, vor allem aber dass sicherheitskritische Signale wie etwa ein Safe-Torque-Off-Signal (STO-Signal) durch den Induktivkoppler korrekt übertragen und entsprechend empfangen werden.

Bei dieser Stoppfunktion handelt es sich um die gängigste Sicherheitsfunktion, aufgrund derer ein Antrieb nicht mehr mit rotations- oder bewegungsverursachender Energie versorgt wird. Der Antrieb läuft drehmomentfrei bis zum Stillstand aus. Auch ein unbeabsichtigter Wiederanlauf wird durch diese Stoppfunktion verhindert.

Zwar ist im Stand der Technik eine redundante Prüfung vorgesehen, da aber für beide redundant vorgehaltenen Steuerungen der Übertragungsweg über den induktiven Koppler derselbe ist, besteht das erhöhte Risiko, beim Verlust eines Datenpakets an einer ersten Steuerung auch das entsprechende Datenpaket an der redundanten zweiten Steuerung zu verlieren.

Weiter ist auf die US 2006/176823 A1 als weiteren Stand der Technik hinzuweisen.

Vor diesem Hintergrund liegt der vorliegenden Erfindung die Aufgabe zu Grunde, eine Werkzeugmaschine zu schaffen, bei welcher eine Kopplung zwischen Maschinensteuerung und Spannvorrichtung so gestaltet ist, dass die Sicherheit der Datenkommunikation gegenüber dem Stand der Technik verbessert ist.

Dies gelingt durch eine Werkzeugmaschine gemäß den Merkmalen des unabhängigen Anspruchs 1, sowie durch ein Verfahren zur Steuerung einer solchen Werkzeugmaschine gemäß den Merkmalen des nebengeordneten Anspruchs 6. Sinnvolle Ausgestaltungen einer solchen Werkzeugmaschine und eines entsprechenden Verfahrens zu deren Steuerung können den sich jeweils anschließenden abhängigen Ansprüchen entnommen werden.

Erfindungsgemäß ist eine Werkzeugmaschine mit einer feststehenden Maschinensteuerung und einer drehenden Spannvorrichtung vorgesehen, wobei die Maschinensteuerung unter Zwischenschaltung einer Kopplungseinheit mit einer mit der Spannvorrichtung drehenden Spannvorrichtungssteuerung kommuniziert. Diese ist dadurch gekennzeichnet, dass die Kopplungseinheit die Maschinensteuerung berührungslos mit der Spannvorrichtungssteuerung datenverbindet, wobei die Spannvorrichtungssteuerung eine Steuereinheit zur Ansteuerung von Vortriebsmitteln zum Betätigen von Spannmitteln der Spannvorrichtung aufweist und der Steuereinheit wenigstens zwei redundante Mikroprozessoren zugeordnet sind, durch welche von der Maschinensteuerung über die Steuereinheit empfangene Prozessdatensätze unabhängig voneinander prüfbar und/oder von Prozesssensoren empfangene Prozessdaten unabhängig voneinander in Prozessdatensätze einsetzbar und über die Steuereinheit an die Maschinensteuerung übermittelbar sind.

Hierdurch wird auf der Seite der Werkzeugmaschine eine Maschinensteuerung und auf der Seite der Spannvorrichtung eine Spannvorrichtungssteuerung gebildet, welche miteinander über die zwischengeschaltete Kopplungseinheit kommunizieren. Die Vortriebsmittel können werden durch Controller gesteuert werden, welche einen Vortrieb der Spannmittel aufeinander zu ermöglichen. Aufgrund dieses Vortriebs bei einander gegenüberliegenden Spannmitteln schließen diese bei geraden Anzahlen von Spannmitteln ein Werkstück von gegenüberliegenden Seiten ein. Im Fall einer Spannvorrichtung mit drei Spannmitteln werden keine gegenüberliegenden Seiten, sondern wird ein Versatz von 120° gewählt, bei fünf Spannmitteln 72° und so weiter. Hierdurch wird ein Werkstück zwischen den Spannmitteln zentriert.

Um eine verbesserte Datensicherheit herzustellen, werden Prozessdatensätze, welche von einer Steuereinheit der Spannvorrichtungssteuerung empfangen werden und damit Ausgangssignale der Maschinensteuerung darstellen, von zwei gleichartigen Mikroprozessoren ausgewertet, welche redundant zueinander vorgehalten werden. Die zu empfangenden Prozessdatensätze enthalten unter anderem ein STO-Signal, alle Prozessdatensätze hingegen eine berechnete Signatur und eine fortlaufende Identifikationsnummer. Sofern die Mikroprozessoren feststellen, dass der Wert des STO-Signals einen sicheren Betriebsmodus vorschreibt, werden sie dies an den ihnen jeweils zugeordneten Controller von Spannmitteln übermitteln und damit bewirken, dass ein Öffnen der Spannmittel, mithin ein Betrieb der Vortriebsmittel bzw. Stellmotoren nicht möglich ist, bis das STO-Signal den sicheren Modus wieder aufhebt. Konkret kann ein Wert des STO-Signals von 1 einen sicheren Betriebszustand vorschreiben, ein STO-Signal von 0 einen sicheren Betriebszustand aufheben. Dies erlaubt eine einfache Codierung in einer auch im Ganzen kurzen Nachricht, welche mit einfachster Infrastruktur übermittelt werden kann.

Wird eine ungültige Signatur empfangen, welche einen fehlerhaften CRC-Code, Huffman-Code, eine falsche Prüfziffer oder dergleichen enthält, so deutet dies auf eine Fehlfunktion hin und die Kommunikation ist nicht mehr sicher. Daher wird der Mikroprozessor dies an die Steuereinheit der Spannvorrichtungssteuerung weitergeben und diese wird die Maschine sicher anhalten. Stimmt die erhaltene nicht mit der erwarteten fortlaufenden Identifikationsnummer überein, so geschieht das Gleiche, da möglicherweise die Kommunikation im Kreis läuft oder im Ganzen gestört ist.

Aufgrund der Redundanz der Mikroprozessoren kann die Sicherheit, mit der ein Fehler aufgefunden und als solcher erkannt wird, vergrößert werden. Es können auch mehr als zwei Mikroprozessoren eingesetzt werden, jedoch ist ein Betrieb stets auch mit zwei Mikroprozessoren möglich.

Auch wenn Prozessdatensätze als Eingangssignal für die Maschinensteuerung zusammengestellt und versandt werden, ist die Redundanz der Mikroprozessoren von Vorteil. Jeder sicherheitskritische Sensor, insbesondere Kraftsensoren oder Spannsignalgeber, welche den Spannzustand etwa einem Nullpunktspannsystem anzeigen, kommunizieren mit jeweils einem Mikroprozessor, wobei ein Mikroprozessor umgekehrt mit mehreren unterschiedlichen Sensoren kommunizieren kann.

Im Rahmen der Kommunikation kann hierbei mit den unterschiedlichen Signalen der Mikroprozessoren so umgegangen werden, dass entweder jeder Mikroprozessor seine eigenen Signale an die Steuereinheit übermittelt und diese ein Signal an die Maschinensteuerung erstellt, oder aber dass ein umlaufender Prozessdatensatz erstellt wird und die Mikroprozessoren die von ihnen verarbeiteten Signale dort einfügen und insoweit die Prozessdatensätze ergänzen.

Mit einigem Vorteil kann es sich bei den Vortriebsmitteln der Spannmittel um Servomotoren handeln, welche mithilfe von Servocontrollern gesteuert sind. Die Servomotoren verfahren die Spannmitteln auf dem Spannvorrichtung in Richtung eines zu zentrierenden Werkstücks, bis dieses mit einer vorgegebenen Kraft gehalten ist und beenden dann ihren Vortrieb. Mithilfe von Reibschlussbremsen wird dann sichergestellt, dass die einmal eingenommene Position bis zu einem Öffnungssignal nicht wieder verlassen wird. Auch erfolgt eine mechanische Selbsthemmung über das Getriebe.

In einer ersten Ausgestaltung kann den Spannmitteln ferner jeweils wenigstens ein Kraftsensor oder Spannsignalgeber zugeordnet sein, so dass diese jeweils lediglich mit einem der Mikroprozessoren datenverbunden sind. In diesem Fall werden mehrere Mikroprozessoren eingesetzt, ebenso viele wie Spannmittel. Da der Einsatz und die Koordination zahlreicher Mikroprozessoren kostspielig und aufwändig ist, wird diese Ausgestaltung nicht bevorzugt.

Bevorzugt wird eine Ausgestaltung, bei der den Spannmitteln jeweils wenigstens ein Kraftsensor oder Spannsignalgeber zugeordnet ist und Mikroprozessoren die Kraftsensoren oder Spannsignalgeber mehrerer Spannmittel zugeordnet sind, wobei die Kraftsensoren oder Spannsignalgeber einander gegenüberliegender Spannmittel unterschiedlichen Mikroprozessoren zugeordnet sind. Hier entsteht eine Verknüpfung dergestalt, dass die einander paarweise gegenüberliegenden Spannmittel jeweils von unterschiedlichen Mikroprozessoren überwacht wird, so dass die Überwachung jedes Paars von zwei Mikroprozessoren erfolgt. Dies bedeutet, dass in dieser Ausgestaltung, unabhängig davon wie viele Spannmittel letztlich eingesetzt werden, stets zwei Mikroprozessoren benötigt werden.

In einer weiteren Abwandlung kann den Spannmitteln jeweils wenigstens ein Kraftsensor oder Spannsignalgeber zugeordnet ein und gleichzeitig können Mikroprozessoren die Kraftsensoren oder Spannsignalgeber mehrerer Spannmittel zugeordnet sein, wobei die Kraftsensoren oder Spannsignalgeber von Spannmitteln mit entgegengesetzt wirkenden Kraftanteilen unterschiedlichen Mikroprozessoren zugeordnet sind. Sind also konkret beispielsweise in einem Spannfutter drei Spannbacken vorgesehen, so können zwei davon mit einem Mikroprozessor, die dritte mit dem anderen Mikroprozessor überwacht werden.

Weiter kann vorgesehen sein, dass den Spannmitteln Wegsensoren zugeordnet sind, welche mit der Steuereinheit datenverbunden sind. Hierbei handelt es sich nicht um sicherheitsrelevante Messwerte, da aus der reinen Position der Spannmittel kein kritischer Zustand ermittelt werden kann. Diese Messwerte werden also nicht an die Mikroprozessoren übermittelt, sondern ausschließlich an die Steuereinheit der Spannvorrichtungssteuerung übertragen.

In konkreter Ausgestaltung kann durch die Kopplungseinrichtung eine induktiv gekoppelte Datenverbindung zwischen der Maschinensteuerung und der Spannvorrichtungssteuerung hergestellt sein. Eine induktive Kopplung ist vorteilhaft, weil diese sowohl eine Energiekopplung als auch eine Signalkopplung ermöglicht. Dennoch ist es erfindungsgemäß auch möglich, etwa eine hydraulische Kopplung vorzusehen, während die Signalkopplung induktiv erfolgen kann. Eine berührungslose Kopplung ist überhaupt erforderlich aufgrund des Umstands, dass eine Signal- und Energieübertragung von der stehenden Werkzeugmaschine zur drehenden Spannvorrichtung geschaffen sein muss.

Mit einigem Vorteil ist es vorgesehen dass die Spannvorrichtungssteuerung mit der Maschinensteuerung auf Basis des Ethernet-Protokolls kommuniziert. Hierbei handelt es sich um ein schnelles und robustes Protokoll, welches auch drahtlos kommuniziert werden kann. Beispielhaft kann hierbei eine PROFINET-Verbindung eingesetzt werden, während innerhalb der Spannvorrichtungssteuerung und/oder der Maschinensteuerung auch Bussysteme wie der CANBUS eingesetzt werden können.

Die vorstehend beschriebene Erfindung wird im Folgenden anhand eines Ausführungsbeispiels näher erläutert.

Es zeigen
- Figur 1: eine schematische Darstellung einer Werkzeugmaschine mit einer Spannvorrichtung und einer Maschinensteuerung, welche über einen Koppler mit einer der Spannvorrichtung zugeordneten Spannvorrichtungssteuerung verbunden ist, sowie
- Figur 2: eine detailliertere schematische Darstellung der Werkzeugmaschine mit den Details der Spannvorrichtungssteuerung und der Maschinensteuerung.

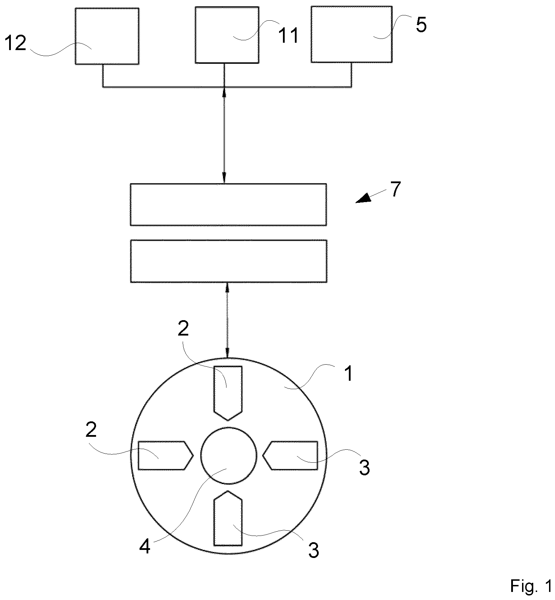

Figur 1 zeigt in schematischer Darstellung ein Spannvorrichtung 1, welches zwei Paare von Spannmitteln 2, 3 aufweist, vermittels derer ein Werkstück 4 im Versatz von jeweils 90° rings gehalten ist. Über einen Induktivkoppler 7 kommuniziert eine Spannvorrichtungssteuerung 20 der Spannvorrichtung 1 mit einer Maschinensteuerung 10 der Werkzeugmaschine, zu welcher hier im Einzelnen eine Steuereinheit 11, eine Sicherheitssteuereinheit 12 und eine Stromversorgung 5 gezeigt sind. Steuereinheiten 11 und 12, wie auch eine Steuereinheit 21 der Spannvorrichtungssteuerung 20, können insbesondere als Speicherprogrammierbare Steuerung (SPS) ausgeführt sein.

Während vonseiten der Steuereinheit 11 Stellsignale, etwa aufgrund eines ablaufenden Programms oder aufgrund von Benutzereinstellungen an einem hier nicht gezeigten Interface, an die Spannvorrichtungssteuerung 20 ausgegeben werden, steht die Sicherheitssteuereinheit 12 hauptsächlich oder ausschließlich für die Kommunikation sicherheitsrelevanter Signale zur Verfügung. Zu diesen gehört insbesondere die Übermittlung eines Kraftsignals, welches anzeigt, mit welcher Kraft die Spannmittel 2, 3 ein Werkstück greifen. Zur Verbesserung der Sicherheit der Datenübertragung über den Induktivkoppler 7 sieht die Erfindung vor, dass eine redundante Überwachung der Signale, welche an die Steuereinheit 21 der Spannvorrichtungssteuerung 20 übermittelt werden, mithilfe von redundant ausgeführten Mikroprozessoren 22, 23 in der Spannvorrichtungssteuerung 20 erfolgt. Eine Übertragung über den Induktivkoppler 7 stellt einen normalen, einfachen Kommunikationskanal dar und ist zunächst nicht abgesichert. Die Auswertung der Signale, welche den Induktivkoppler 7 passieren, durch zwei unabhängige Mikroprozessoren 22, 23 hilft daher, die Sicherheit der Datenübertragung zu verbessern.

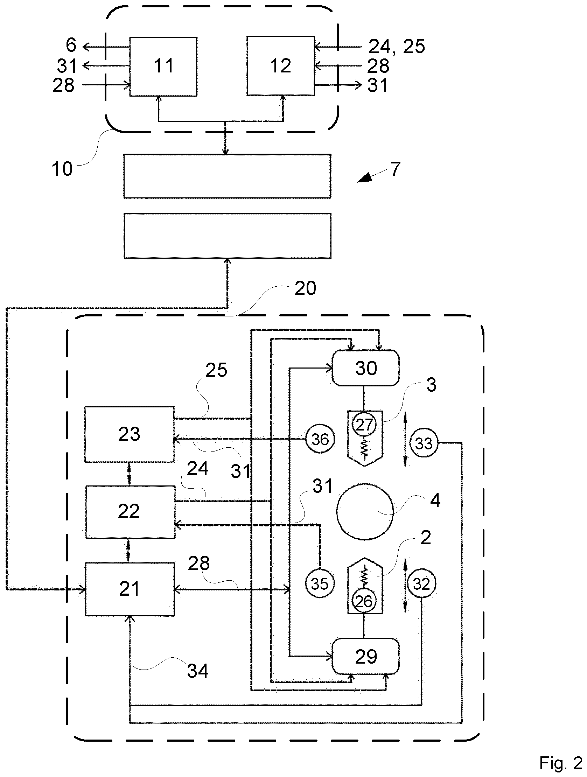

Ergänzend zu der groben Einteilung der Figur 1 ist dieser Sachverhalt in der Figur 2 in einem größeren Detailgrad wiedergegeben, wobei auf einzelne untergeordnete Aspekte verzichtet ist.

Gezeigt ist am Beispiel von zwei Spannmitteln 2, 3, dass ein Werkstück 4 von diesen zentriert werden kann. Hierzu können die Spannmittel 2, 3 mithilfe von Servomotoren 26, 27 verfahren werden, was mithilfe von Wegsensoren 32, 33 überwacht wird. Die Steuerung erfolgt mithilfe einer Steuereinheit 21 der Spannvorrichtungssteuerung 20 über einen CAN-Bus. Über diese sind Servocontroller 29, 30 mit der Steuereinheit 21 datenverbunden. Während die Steuervorgaben von der Maschinensteuerung 10 her, dort im Einzelnen von einer Steuereinheit 11 kommen, läuft die direkte Ansteuerung der Servocontroller 29, 30 und über diese die Ansteuerung der Servomotoren 26, 27 innerhalb der Spannvorrichtungssteuerung 20 ab. Spannvorrichtungssteuerung 20 und Maschinensteuerung 10 sind, wie bereits in Figur 1 dargestellt, über einen Induktivkoppler 7 datenverbunden.

Konkret werden Stellbefehle aufgrund entsprechender Programmierung zunächst an eine Steuereinheit 11 der Maschinensteuerung 10 übertragen. Diese sendet ihrerseits Stellbefehle über den Induktivkoppler 7 an die Steuereinheit 21 der Spannvorrichtungssteuerung 20. Die Steuereinheit 21 veranlasst daraufhin beispielsweise, dass die Spannmittel 2, 3 geschlossen, also auf das Werkstück 4 zubewegt werden. Entsprechende Steuersignale 28 werden an die beiden Servocontroller 29, 30 übermittelt, die wiederum ihrerseits die Servomotoren 26, 27 entsprechend ansteuern. Die Wegsensoren 32, 33 überwachen die Lage der jeweils zugeordneten Spannmittel 2, 3 und melden deren Positionen an die Steuereinheit 21 zurück.

Gleichzeitig wird aber auch die auf die Spannmittel 2, 3 wirkende Kraft erfasst. Jedem Spannmittel 2, 3 ist hierzu ein Kraftsensor 35, 36 zugeordnet, welcher mit einem Mikroprozessor 22, 23 kommuniziert und diesem Statussignale 31 übermittelt. Um eine ausreichende Redundanz in der Datengewinnung zu erzielen, kommuniziert ein einem ersten Spannmittel 2 zugeordneter erster Kraftsensor 35 mit einem ersten Mikroprozessor 22, während ein weiterer Kraftsensor 36, welcher einem weiteren Spannmittel 3 zugeordnet ist, mit einem zweiten Mikroprozessor 23 kommuniziert. Die Mikroprozessoren 22, 23 empfangen die Kraftsignale und tragen diese in einen Prozessdatensatz ein, welcher im Umlaufverfahren von den Mikroprozessoren 22, 23 gefüllt und dann von der Steuereinheit 21 an die Maschinensteuerung 10 übermittelt wird. Dort empfängt und verarbeitet insbesondere die Sicherheitssteuereinheit 12 die Signale der Kraftsensoren. Sollte hierbei ein Fehler auftreten, also insbesondere eine Kraft nachlassen, so kann die Maschinensteuerung 10 hierauf reagieren und die Maschine in einen sicheren Zustand steuern. Stets müssen die beiden Kriterien erfüllt sein, dass die Spannmittel sich nicht lösen dürfen und das Werkstück mit der Sollspannkraft gespannt bleibt.

Für eine ausreichende Redundanz genügt es, wenn bei jedem Kräftegleichgewicht mehrere Mikroprozessoren 22, 23 zur Kontrolle beteiligt sind, so dass auch bei höheren Anzahlen von Spannmitteln 2, 3 nicht notwendigerweise mehr als zwei Mikroprozessoren 22, 23 beteiligt sein müssen. Dies kann allerdings dennoch so umgesetzt werden. Auch bei ungeraden Anzahlen von Spannmitteln kann etwa ein Spannmittel von einem, die anderen beiden Spannmittel von dem anderen Mikroprozessor kontrolliert werden, da in der Kontrolle der Kraftsumme an jedem Spannmittel zumindest zwei Mikroprozessoren beteiligt sind.

Stellt ein Mikroprozessor 22, 23 im Betrieb eine falsche, insbesondere zu hohe Kraft an einem Kraftsensor 35, 36 fest, oder tritt ein anderer kritischer Fehlerfall ein, nämlich ein Fehler in einer Signatur oder einer Identifikationsnummer eines Prozessdatensatzes, welche von den Mikroprozessoren 22, 23 redundant geprüft werden, so meldet dies der Mikroprozessor 22, 23 an die Sicherheitssteuereinheit 12 der Maschinensteuerung 10, welche die Maschine in einen sicheren Zustand steuert, insbesondere durch ein Stoppsignal, mit dem die Maschine angehalten wird, um Verletzungen oder Beschädigungen aufgrund des schnell drehenden, nun aber im ungünstigsten Fall gelösten Werkstücks zu vermeiden.

Vorstehend beschrieben ist somit eine Werkzeugmaschine, bei welcher eine Kopplung zwischen Maschine und Werkzeug so gestaltet ist, dass die Sicherheit der Datenkommunikation gegenüber dem Stand der Technik verbessert ist.

### BEZUGSZEICHENLISTE

- 1: Spannvorrichtung
- 2: erste Spannmittel
- 3: weitere Spannmittel
- 4: Werkstück
- 5: Stromversorgung
- 6: Überwachungssignal
- 7: Induktivkoppler
- 10: Maschinensteuerung
- 11: Steuereinheit
- 12: Sicherheitssteuereinheit
- 20: Spannvorrichtungssteuerung
- 21: Steuereinheit
- 22: erster Mikroprozessor
- 23: zweiter Mikroprozessor
- 24: erstes Stoppsignal
- 25: zweites Stoppsignal
- 26: erster Servomotor
- 27: weiterer Servomotor
- 28: Steuersignal
- 29: erster Servocontroller
- 30: weiterer Servocontroller
- 31: Statussignal
- 32: erster Wegsensor
- 33: weiterer Wegsensor
- 34: Wegsignal
- 35: erster Kraftsensor
- 36: weiterer Kraftsensor

## Patentansprüche

1. Werkzeugmaschine mit einer feststehenden Maschinensteuerung (10) und einer drehenden Spannvorrichtung (1), wobei die Maschinensteuerung (10) unter Zwischenschaltung einer Kopplungseinheit (7) mit einer mit der Spannvorrichtung (1) drehenden Spannvorrichtungssteuerung (20) kommuniziert, wobei die Kopplungseinheit (7) die Maschinensteuerung (10) berührungslos mit der Spannvorrichtungssteuerung (20) datenverbindet, wobei die Spannvorrichtungssteuerung (20) eine Steuereinheit (21) zur Ansteuerung von Vortriebsmitteln zum Betätigen von Spannmitteln (2, 3) der Spannvorrichtung (1) aufweist und der Steuereinheit (21) wenigstens zwei redundante Mikroprozessoren (22, 23) zugeordnet sind, durch welche von der Maschinensteuerung (10) über die Steuereinheit (21) empfangene Prozessdatensätze unabhängig voneinander prüfbar und/oder von Prozesssensoren empfangene Prozessdaten unabhängig voneinander in Prozessdatensätze einsetzbar und über die Steuereinheit (21) an die Maschinensteuerung (10) übermittelbar sind,
**dadurch gekennzeichnet dass** entweder den Spannmitteln (2, 3) jeweils wenigstens ein Kraftsensor (35, 36) oder Spannsignalgeber zugeordnet ist und diese jeweils lediglich mit einem der Mikroprozessoren (22, 23) datenverbunden sind, oder den Mikroprozessoren (22, 23) die Kraftsensoren (35, 36) oder Spannsignalgeber mehrerer Spannmittel (2, 3) zugeordnet und die Kraftsensoren (35, 36) oder Spannsignalgeber einander gegenüberliegender Spannmittel (2, 3) unterschiedlichen Mikroprozessoren (22, 23) zugeordnet sind.

2. Werkzeugmaschine gemäß Anspruch 1, **dadurch gekennzeichnet, dass** es sich bei den Vortriebsmitteln der Spannmittel (2, 3) um Servomotoren (26, 27) handelt, welche mithilfe von Servocontrollern (29, 30) gesteuert sind.

3. Werkzeugmaschine gemäß einem der Ansprüche 1 oder 2, **dadurch gekennzeichnet, dass** den Spannmitteln (2, 3) jeweils wenigstens ein Kraftsensor (35, 36) oder Spannsignalgeber zugeordnet ist und Mikroprozessoren (22, 23) die Kraftsensoren (35, 36) oder Spannsignalgeber mehrerer Spannmittel (2, 3) zugeordnet sind, wobei die Kraftsensoren (35, 36) oder Spannsignalgeber von Spannmitteln (2, 3) mit entgegengesetzt wirkenden Kraftanteilen unterschiedlichen Mikroprozessoren (22, 23) zugeordnet sind.

4. Werkzeugmaschine gemäß einem der vorhergehenden Ansprüche, **dadurch gekennzeichnet, dass** den Spannmitteln (2, 3) Wegsensoren (32, 33) zugeordnet sind, welche mit der Steuereinheit (21) datenverbunden sind.

5. Werkzeugmaschine gemäß einem der vorhergehenden Ansprüche, **dadurch gekennzeichnet, dass** durch die Kopplungseinrichtung (7) eine induktiv gekoppelte Datenverbindung zwischen der Maschinensteuerung (10) und der Spannvorrichtungssteuerung (20) hergestellt ist.

6. Verfahren zur Steuerung einer Werkzeugmaschine mit einer feststehenden Maschinensteuerung (10) und einer drehenden Spannvorrichtung (1), wobei die Maschinensteuerung (10) unter Zwischenschaltung einer Kopplungseinheit (7) mit einer mit der Spannvorrichtung (1) drehenden Spannvorrichtungssteuerung (20) kommuniziert, wobei die Kopplungseinheit (7) die Maschinensteuerung (10) berührungslos mit der Spannvorrichtungssteuerung (20) datenverbindet, und die Spannvorrichtungssteuerung (20) eine Steuereinheit (21) zur Ansteuerung von Vortriebsmitteln zum Betätigen von Spannmitteln (2, 3) der Spannvorrichtung (1) aufweist und von der Maschinensteuerung (10) an die Spannvorrichtungssteuerung (20) versandte Prozessdatensätze von zwei redundanten Mikroprozessoren (22, 23) unabhängig geprüft werden und/oder die Mikroprozessoren (22, 23) von Prozesssensoren empfangene Prozessdaten unabhängig voneinander in Prozessdatensätze einsetzen und über die Steuereinheit (21) an die Maschinensteuerung (10) übermitteln,
**dadurch gekennzeichnet dass** entweder den Spannmitteln (2, 3) jeweils wenigstens ein Kraftsensor (35, 36) oder Spannsignalgeber zugeordnet ist und von diesen versandte Prozessdatensätze jeweils lediglich von einem der Mikroprozessoren (22, 23) geprüft werden, oder den Mikroprozessoren (22, 23) die Kraftsensoren (35, 36) oder Spannsignalgeber mehrerer Spannmittel (2, 3), und die Kraftsensoren (35, 36) oder Spannsignalgeber einander gegenüberliegender Spannmittel (2, 3) unterschiedlichen Mikroprozessoren (22, 23) zur Prüfung der versandten Prozessdatensätze zugeordnet sind.

7. Verfahren gemäß Anspruch 6, **dadurch gekennzeichnet, dass** Prozessdatensätze eine berechnete Signatur und/oder eine fortlaufende Identifikationsnummer aufweisen.

8. Verfahren gemäß einem der Ansprüche 6 oder 7, **dadurch gekennzeichnet, dass** von der Maschinensteuerung (10) ausgegebene Prozessdatensätze für jedes Vortriebsmittel ein STO-Signal (Safe-Torque-Off-Signal) umfassen, wobei eine Bewegung des betreffenden Vortriebsmittels nur dann freigegeben ist, wenn das Signal einem Freigabesignal entspricht.

9. Verfahren gemäß einem der Ansprüche 7 oder 8, **dadurch gekennzeichnet, dass** die Mikroprozessoren (22, 23) im Fall eines Erhalts eines STO-Signals oder im Fall eines Fehlers in einer Signatur oder einem Abweichen von einer erwarteten Identifikationsnummer unabhängig voneinander ein Stoppsignal an die Spannmittel (2, 3) ausgeben.

10. Verfahren gemäß einem der Ansprüche 6 bis 9, **dadurch gekennzeichnet, dass** Sensordaten von Kraftsensoren (35, 36) oder Spannsignalgebern an die Mikroprozessoren (22, 23) übermittelt werden und diese in Prozessdatensätze zum Versand an die Maschinensteuerung (10) eingesetzt werden.

11. Verfahren gemäß Anspruch 10, **dadurch gekennzeichnet, dass** jeder Mikroprozessor (22, 23) eigene Prozessdatensätze erstellt und über die Steuereinheit (21) an die Maschinensteuerung (10) übermittelt.

12. Verfahren gemäß Anspruch 10, **dadurch gekennzeichnet, dass** jeder Mikroprozessor (22, 23) die von ihm empfangenen Prozessdaten in einen umlaufenden Prozessdatensatz einträgt und die Steuereinheit (21) den umlaufenden Prozessdatensatz an die Maschinensteuerung (10) übermittelt.

## Claims

1. Machine tool comprising a fixed machine controller (10) and a rotating clamping device (1), wherein the machine controller (10) communicates with a clamping device controller (20) rotating with the clamping device (1) with the interposition of a coupling unit (7), wherein the coupling unit (7) contactlessly data-links the machine controller (10) to the clamping device controller (20), wherein the clamping device controller (20) has a control unit (21) for controlling drive means for actuating clamping means (2, 3) of the clamping device (1), and at least two redundant microprocessors (22, 23) are assigned to the control unit (21), by means of which process data sets received from the machine controller (10) via the control unit (21) can be checked independently of one another and/or process data received from process sensors can be inserted independently of one another into process data sets and transmitted to the machine controller (10) via the control unit (21),
**characterized in that** either at least one force sensor (35, 36) or clamping signal transmitter is assigned to each of the clamping means (2, 3) and they are each data-linked to only one of the microprocessors (22, 23), or the force sensors (35, 36) or clamping signal transmitters of multiple clamping means (2, 3) are assigned to the microprocessors (22, 23) and the force sensors (35, 36) or clamping signal transmitters of opposing clamping means (2, 3) are assigned to different microprocessors (22, 23).

2. Machine tool according to claim 1, **characterized in that** the drive means of the clamping means (2, 3) are servo motors (26, 27) which are controlled by means of servo controllers (29, 30).

3. Machine tool according to any of claims 1 or 2, **characterized in that** at least one force sensor (35, 36) or clamping signal transmitter is assigned to each of the clamping means (2, 3), and the force sensors (35, 36) or clamping signal transmitters of multiple clamping means (2, 3) are assigned to microprocessors (22, 23), wherein the force sensors (35, 36) or clamping signal transmitters of clamping means (2, 3) with opposing force components are assigned to different microprocessors (22, 23).

4. Machine tool according to any of the preceding claims,
**characterized in that** the clamping means (2, 3) are assigned displacement sensors (32, 33) which are data-linked to the control unit (21).

5. Machine tool according to any of the preceding claims,
**characterized in that** an inductively coupled data link between the machine controller (10) and the clamping device controller (20) is established by the coupling device (7).

6. Method for controlling a machine tool comprising a fixed machine controller (10) and a rotating clamping device (1), wherein the machine controller (10) communicates with a clamping device controller (20) rotating with the clamping device (1) with the interposition of a coupling unit (7), wherein the coupling unit (7) contactlessly data-links the machine controller (10) to the clamping device controller (20), and the clamping device controller (20) has a control unit (21) for controlling drive means for actuating clamping means (2, 3) of the clamping device (1), and process data sets sent from the machine controller (10) to the clamping device controller (20) are independently checked by two redundant microprocessors (22, 23) and/or the microprocessors (22, 23) insert process data received from process sensors independently of one another into process data sets and transmit them to the machine controller (10) via the control unit (21),
**characterized in that** either at least one force sensor (35, 36) or clamping signal transmitter is assigned to each of the clamping means (2, 3), and process data sets sent by these are each checked by only one of the microprocessors (22, 23), or the force sensors (35, 36) or clamping signal transmitters of multiple clamping means (2, 3) are assigned to the microprocessors (22, 23), and the force sensors (35, 36) or clamping signal transmitters of opposing clamping means (2, 3) are assigned to different microprocessors (22, 23) for checking the sent process data sets.

7. Method according to claim 6, **characterized in that** process data sets have a calculated signature and/or a consecutive identification number.

8. Method according to any of claims 6 or 7, **characterized in that** process data sets output by the machine controller (10) comprise an STO signal (Safe Torque Off signal) for each drive means, wherein a movement of the relevant drive means is enabled only if the signal corresponds to an enabling signal.

9. Method according to any of claims 7 or 8, **characterized in that** the microprocessors (22, 23) independently output a stop signal to the clamping means (2, 3) in the event of receipt of an STO signal or in the event of an error in a signature or a deviation from an expected identification number.

10. Method according to any of claims 6 to 9, **characterized in that** sensor data from force sensors (35, 36) or clamping signal transmitters are transmitted to the microprocessors (22, 23) and these are inserted into process data sets for sending to the machine controller (10).

11. Method according to claim 10, **characterized in that** each microprocessor (22, 23) creates its own process data sets and transmits them to the machine controller (10) via the control unit (21).

12. Method according to claim 10, **characterized in that** each microprocessor (22, 23) enters the process data received by it into a circulating process data set and the control unit (21) transmits the circulating process data set to the machine controller (10).

## Revendications

1. Machine-outil comportant une commande de machine (10) fixe et un dispositif de serrage (1) rotatif, dans laquelle la commande de machine (10) communique, par interposition d'une unité de couplage (7), avec une commande de dispositif de serrage (20) en rotation avec le dispositif de serrage (1), dans laquelle l'unité de couplage (7) relie par des données la commande de machine (10), sans contact, à la commande de dispositif de serrage (20), dans laquelle la commande de dispositif de serrage (20) présente une unité de commande (21) destinée à la commande de moyens de propulsion pour l'actionnement de moyens de serrage (2, 3) du dispositif de serrage (1), et au moins deux microprocesseurs (22, 23) redondants sont associés à l'unité de commande (21), microprocesseurs grâce auxquels des ensembles de données de processus reçus par la commande de machine (10) par l'intermédiaire de l'unité de commande (21) peuvent être contrôlés indépendamment les uns des autres et/ou des données de processus reçues par des capteurs de processus peuvent être insérées indépendamment les unes des autres dans des ensembles de données de processus et peuvent être transmises à la commande de machine (10) par l'intermédiaire de l'unité de commande (21),
**caractérisée en ce que** soit au moins un capteur de force (35, 36) ou un générateur de signaux de serrage est associé respectivement aux moyens de serrage (2, 3), lesquels capteur de force et générateur de signaux de serrage ne sont reliés par des données qu'à l'un des microprocesseurs (22, 23), soit les capteurs de force (35, 36) ou les générateurs de signaux de serrage de plusieurs moyens de serrage (2, 3) sont associés aux microprocesseurs (22, 23) et les capteurs de force (35, 36) ou les générateurs de signaux de serrage de moyens de serrage (2, 3) opposés les uns aux autres sont associés à différents microprocesseurs (22, 23).

2. Machine-outil selon la revendication 1, **caractérisée en ce que** les moyens de propulsion des moyens de serrage (2, 3) sont des servomoteurs (26, 27) qui sont commandés à l'aide de servocontrôleurs (29, 30).

3. Machine-outil selon l'une des revendications 1 ou 2,
**caractérisée en ce qu'au** moins un capteur de force (35, 36) ou un générateur de signaux de serrage est associé respectivement aux moyens de serrage (2, 3), et des microprocesseurs (22, 23) sont associés aux capteurs de force (35, 36) ou aux générateurs de signaux de serrage de plusieurs moyens de serrage (2, 3), dans laquelle les capteurs de force (35, 36) ou les générateurs de signaux de serrage de moyens de serrage (2, 3) comportant des proportions de force agissant en sens inverse sont associés à différents microprocesseurs (22, 23).

4. Machine-outil selon l'une des revendications précédentes,
**caractérisée en ce que** des capteurs de déplacement (32, 33) sont associés aux moyens de serrage (2, 3), lesquels capteurs de déplacement sont reliés par des données à l'unité de commande (21).

5. Machine-outil selon l'une des revendications précédentes,
**caractérisée en ce qu'**une liaison de données à couplage inductif est établie entre la commande de machine (10) et la commande de dispositif de serrage (20) par le dispositif de couplage (7).

6. Procédé pour la commande d'une machine-outil comportant une commande de machine (10) fixe et un dispositif de serrage (1) rotatif, dans lequel la commande de machine (10) communique, par l'interposition d'une unité de couplage (7), avec une commande de dispositif de serrage (20) en rotation avec le dispositif de serrage (1), dans lequel l'unité de couplage (7) relie par données la commande de machine (10), sans contact, à la commande de dispositif de serrage (20) et la commande de dispositif de serrage (20) présente une unité de commande (21) destinée à la commande de moyens de propulsion pour l'actionnement de moyens de serrage (2, 3) du dispositif de serrage (1), et des ensembles de données de processus envoyés par la commande de machine (10) à la commande de dispositif de serrage (20) sont contrôlés indépendamment les uns des autres par deux microprocesseurs (22, 23) redondants et/ou les microprocesseurs (22, 23) insèrent des données de processus reçues de capteurs de processus indépendamment les unes des autres dans des ensembles de données de processus et les transmettent à la commande de machine (10) par l'intermédiaire de l'unité de commande (21),
**caractérisé en ce que** soit au moins un capteur de force (35, 36) ou un générateur de signaux de serrage est associé respectivement aux moyens de serrage (2, 3) et les ensembles de données de processus envoyés par ce capteur de force et ce générateur de signaux de serrage ne sont contrôlés que par l'un des microprocesseurs (22, 23), soit les capteurs de force (35, 36) ou les générateurs de signaux de serrage de plusieurs moyens de serrage (2, 3) sont associés aux microprocesseurs (22, 23), et les capteurs de force (35, 36) ou les générateurs de signaux de serrage de moyens de serrage (2, 3) opposés les uns aux autres sont associés à différents microprocesseurs (22, 23) pour le contrôle des ensembles de données de processus envoyés.

7. Procédé selon la revendication 6, **caractérisé en ce que** des ensembles de données de processus présentent une signature calculée et/ou un numéro d'identification séquentiel.

8. Procédé selon l'une des revendications 6 ou 7, **caractérisé en ce que** des ensembles de données de processus émis par la commande de machine (10) comprennent un signal STO (Safe-Torque- Off-Signal, signal d'arrêt du couple de sécurité) pour chaque moyen de propulsion, dans lequel un mouvement du moyen de propulsion concerné n'est autorisé que si le signal correspond à un signal d'autorisation.

9. Procédé selon l'une des revendications 7 ou 8, **caractérisé en ce que** les microprocesseurs (22, 23) émettent indépendamment les uns des autres un signal d'arrêt vers les moyens de serrage (2, 3) en cas de réception d'un signal STO ou en cas d'erreur dans une signature ou d'écart par rapport à un numéro d'identification attendu.

10. Procédé selon l'une des revendications 6 à 9, **caractérisé en ce que** des données de capteur provenant de capteurs de force (35, 36) ou de générateurs de signaux de serrage sont transmises aux microprocesseurs (22, 23) et sont utilisées dans des ensembles de données de processus pour être envoyées à la commande de machine (10).

11. Procédé selon la revendication 10, **caractérisé en ce que** chaque microprocesseur (22, 23) crée ses propres ensembles de données de processus et les transmet à la commande de machine (10) par l'intermédiaire de l'unité de commande (21).

12. Procédé selon la revendication 10, **caractérisé en ce que** chaque microprocesseur (22, 23) enregistre les données de processus qu'il reçoit dans un ensemble de données de processus en circulation et l'unité de commande (21) transmet l'ensemble de données de processus en circulation à la commande de machine (10).
